# EUROPEAN PATENT SPECIFICATION

(11) **EP 3 974 463 B1**
(45) Date of publication and mention of the grant of the patent: **03.01.2024**
(21) Application number: 19931751.2
(22) Date of filing: 06.11.2019
(51) Int. Cl.: C08G 69/32, C08G 69/40, C08G 69/26, C08L 77/10, D01F 6/82, D01D 5/06

(54) **PREPARATION METHOD OF HIGH MOLECULAR WEIGHT FURAN-BASED AROMATIC POLYAMIDE.**
VERFAHREN ZUR HERSTELLUNG EINES AROMATISCHEN POLYAMIDS AUF FURANBASIS MIT HOHEM MOLEKULARGEWICHT.
MÉTHODE DE PRÉPARATION D'UN POLYAMIDE AROMATIQUE À BASE DE FURANE DE POIDS MOLÉCULAIRE ÉLEVÉ.

(30) Priority: 04.06.2019 CN 201910484755
(43) Date of publication of application: 30.03.2022
(73) Proprietor: University of Science and Technology of China, Anhui 230026 (CN)
(72) Inventor: FU, Yao, Hefei Anhui 230026 (CN); LI, Feng, Hefei Anhui 230026 (CN); GAO, Jingmin, Hefei Anhui 230026 (CN); ZHU, Jun, Hefei Anhui 230026 (CN); SHENG, Tianran, Hefei Anhui 230026 (CN); LI, Xinglong, Hefei Anhui 230026 (CN); FU, Mingchen, Hefei Anhui 230026 (CN)
(74) Representative: De Clercq & Partners
(86) International application number: PCT/CN2019/116042
(87) International publication number: WO 2020/244143

(56) References cited:
- CN-A- 110 229 329
- US-A1- 2017 210 851

## Description

### Field of the Invention

The present disclosure relates to the field of polyamide and its preparation, and particularly to a preparation method of a high molecular weight furan-based aromatic polyamide.

### Background of the Invention

Polyamides have advantages such as excellent mechanical properties, good self-lubrication, good friction resistance, high heat-resistant temperature, high electrical insulation, etc., and have been widely used in the areas of machinery, automobiles, electric appliances, textile equipment, chemical equipment, aviation, metallurgy, etc.. Polyamide is a bulk of engineering plastic material, which is of great significance to the national economy, social development and national defense security. With the development of society, the demand for polyamide compounds continues to grow rapidly..

In comparison with petroleum-based polyamides, the monomer 2,5-furandicarboxylic acid of furan-based polyamides is made from biomass derived from renewable resources., which has significantly lower CO₂ gas emission compared with a petroleum-based raw material, and thus are much more environmentally friendly. Furan-based polyamides are also one of the twelve most potential bio-based platform compounds selected by the United States Department of Energy. From the perspective of the structure and properties, furandicarboxylic acid is a five-membered aromatic ring, which has a similar structure and properties to terephthalic acid. However, because the furan ring has an oxygen atom, so that the intermolecular hydrogen bonding force is reduced and the Vand der Waals' force is increased, the solubility and processability are significantly enhanceed. Furthermore, the introduction of an oxygen atom greatly enhances the colorability of furan-based polyamides, which is particularly beneficial for the application in the fiber field. These characteristics make furan-based polyamides have excellent development potential and application prospects.

CN105801843A discloses a semi-biomass furan-based soluble aromatic polyamide and the preparation method and use thereof. Although a furandicarboxylic acid monomer that can be derived from a biomaterial is used therein, the basic monomers used to obtain the aromatic polyamide are furandicarboxylic acid or derivatives thereof and p-phenylenediamine, and for the synthesis, it is necessary to use inorganic metal salts as a catalyst. However, it is difficult to completely remove inorganic metal salts such as LiCl from the reaction system, and residual inorganic salts will degrade the mechanical properties of polyamide products. Meanwhile, the synthesis method needs to be completed in multiple steps at a high temperature of 90-130°C (namely, the preparation process being complex), and the aromatic polyamide obtained has a lower number average molecular weight (lower than 200,000).

CN104245793A discloses a composition comprising a furan-based meta-aromatic polyamide, an article prepared therefrom, and a preparation method thereof. However, the basic monomers used to obtain the furan-based polyamide polymer are a furandicarboxylic acid or derivatives thereof and m-phenylenediamine. Although it is mentioned that the furan-based polyamide polymer may have a very high molecular weight, the highest weight average molecular weights of the polymers actually synthesized in the examples are all in a lower range of tens of thousands to 100,000, and no polymer with a molecular weight higher than 200,000 has actually been obtained. Moreover, in fact, as can be seen from Example 2 of this document, in the method for synthesizing the furan-based polyamide polymer having a high weight average molecular weight (100994 g/mol), it is also necessary to use inorganic metal salts such as LiCl as a catalyst, and thus it also has the same problem as mentioned above. That is, it is difficult to completely remove the inorganic metal salts such as LiCl from the reaction system, and the residual inorganic salts will degrade the mechanical properties of the polyamide products.

CN110229329 discloses a continuous production device for high polymerization degree semi-biomass furan polyamide resin and production method thereof. US2017210851 discloses furan based polyamides and articles made therefrom.

Therefore, there is a need in the art for a novel biomass furan-based polyamide having a higher molecular weight, while the furan-based polyamide polymer can be synthesized by a simple method without using a conventional harmful inorganic salt catalyst.

### Summary of the Invention

An object of the present description (not according to the invention) is to provide a novel high molecular weight furan-based polyamide (i.e., having a molecular weight of at least greater than 200,000). An object of the present disclosure (according to the invention) is to provide a novel method for synthesizing the high molecular weight furan-based polyamide, which method can be completed at a low temperature without using any inorganic metal salt catalyst, and the reaction process is simple, and is easily industrialized.

To this end, in one aspect, the present disclosure provides a method for preparing a high molecular weight furan-based aromatic polyamide, wherein the furan-based aromatic polyamide is derived from a diacid monomer comprising substituted or unsubstituted furandicarboxylic acid or derivatives thereof and a diamine monomer comprising substituted or unsubstituted 4,4'-diaminodiphenyl ether or derivatives thereof, and thus comprises a repeating unit of Formula (I) below: 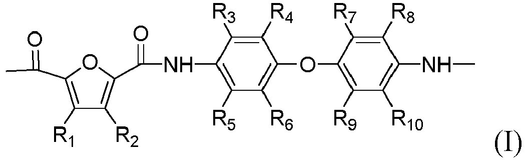
in Formula (I), R₁, R₂, R₃, R₄, R₅, R₆, R₇, R₈, R₉ and R₁₀ are each independently H or a C₁₋₆-alkyl,
wherein the furan-based aromatic polyamide has a number average molecular weight more than 200,000.

In a preferred embodiment, the furan-based aromatic polyamide has a structure of Formula (II) below: 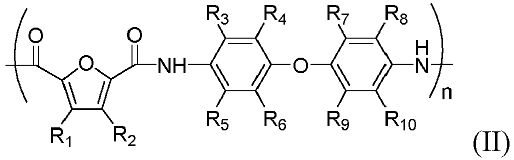 in Formula (II), R₁, R₂, R₃, R₄, R₅, R₆, R₇, R₈, R₉ and R₁₀ are each independently H or a C₁₋₆-alkyl, and n is in a range of from 700 to 2,000.

In a preferred embodiment, the derivative of furandicarboxylic acid is furandioyl chloride.

In a preferred embodiment, the diacid monomer further comprises a diacid comonomer, wherein the diacid comonomer is one or more selected from the group consisting of terephthalic acid, isophthalic acid, phthalic acid, 1,9-naphthalic acid, 1,3,5-benzenetricarboxylic acid, adipic acid, nonandioic acid, dodecanedioic acid, succinic acid, maleic acid and citric acid.

In a preferred embodiment, the diamine monomer further comprises a diamine comonomer, wherein the diamine comonomer is one or more selected from the group consisting of *p*-phenylenediamine, *m*-phenylenediamine, 3,3'-dimethylbenzidine, 2,3-diaminotoluene, 4,4-diaminodiphenylmethane, 4,4-diaminodiphenylsulfone, 3,4-diaminodiphenyl ether, 3,3'-dichloro-4,4-diaminodiphenylmethane, 3,3'-dimethyl-4,4'-diaminodimethylmethane, 2,4-diaminotoluene, ethylenediamine, hexanediamine, 1,3-propanediamine, N,N-dimethylethylenediamine, 1,4-butanediamine, 1,2-cyclohexanediamine and decanediamine.

In a preferred embodiment, the furan-based aromatic polyamide has a structure of Formula (III), Formula (IV) or Formula (V) below: 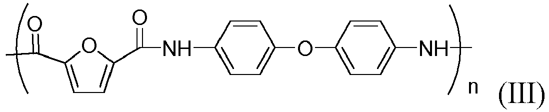
in Formula (III), n is in a range of from 700 to 2,000; 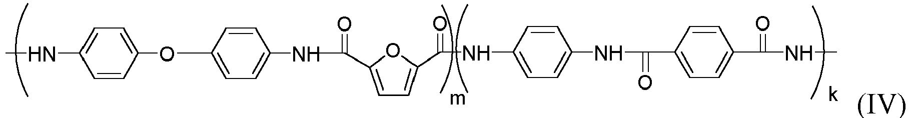
in Formula (IV), m > 1, k > 1, and m + k = 700 - 2,000; and 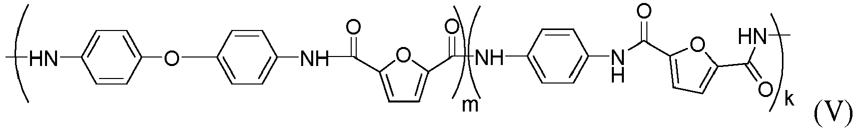
in Formula (V), m > 1, k > 1, and m + k = 700 - 2,000.

In another aspect, the present disclosure provides a method for preparing the furan-based aromatic polyamide as described above, comprising:
dissolving a diamine monomer comprising substituted or unsubstituted 4,4'-diaminodiphenyl ether or derivatives thereof in an organic solvent under the protection of an inert gas to form a diamine solution;
adding a diacid monomer comprising substituted or unsubstituted furandicarboxylic acid or derivatives thereof, together with a catalyst of 2-(7-oxidebenzotriazolyl)-N,N,N',N'-tetramethyluronium hexafluorophosphate, to the diamine solution at a temperature in a range of from -10°C to 30°C, so as to perform the reaction under stirring; and
continuing the reaction until a furan-based aromatic polyamide with the desired molecular weight is obtained.

In a preferred embodiment, the organic solvent is one or more selected from the group consisting of N,N-dimethylformamide, N,N-dimethylacetamide, N-methylpyrrolidinone and acetonitrile; and the reaction is continued for 2 to 15 hours.

In a preferred embodiment, a mass ratio of the organic solvent to the diamine monomer is in a range of from 2:1 to 10:1.

In a preferred embodiment, a molar ratio of the diacid monomer to the diamine monomer is in a range of from 1:1 to 1:1.5.

In a preferred embodiment, the substituted or unsubstituted furandicarboxylic acid or derivatives thereof are biomass-derived.

In yet another aspect, the present description (not according to the invention) provides use of the furan-based aromatic polyamide as described above for preparing a fiber, a film material, or a nanoparticle/polymer composite material.

The present disclosure provides a novel high molecular weight furan-based aromatic polyamide having a number average molecular weight greater than 200,000, wherein the high molecular weight furan-based aromatic polyamide is derived from a diacid monomer comprising substituted or unsubstituted furandicarboxylic acid or derivatives thereof and a diamine monomer comprising substituted or unsubstituted 4,4'-diaminodiphenyl ether. In the present disclosure, the diacid monomer used may be derived from biomass, meeting the requirements for sustainable development. Meanwhile, the preparation method thereof has mild reaction conditions (approximately at a normal temperature and pressure) and a simple process. In the reaction process, a catalytic amount of 2-(7-oxidebenzotriazolyl)-N,N,N',N'-tetramethyluronium hexafluorophosphate is used without any inorganic metal salt catalyst, overcoming the influence of inorganic catalysts on the mechanical properties of the furan-based polyamide product obtained. Thus, the high molecular weight biomass furan-based aromatic polyamide of the present disclosure has excellent thermodynamic properties and mechanical properties, and can be used for preparing a fiber, a film material, a nanoparticle/polymer composite material. Furthermore, the high molecular weight biomass furan-based aromatic polyamide of the present disclosure has good thermal stability, with a decomposition temperature up to 330°C.

### Brief Description of Drawings

Fig. 1 is a hydrogen nuclear magnetic resonance (¹H-NMR) spectrum of a furan-based aromatic polyamide polymer obtained through the polymerization reaction of 2,5-furandioyl chloride and 4,4-diaminodiphenyl ether according to Example 1 of the present disclosure.
Fig. 2 is a photograph of a furan-based aromatic polyamide spun fiber obtained according to Example 2 of the present disclosure.

### Detailed Description

With intensive and extensive research, the inventors have found that furandicarboxylic acid is a five-membered ring, which has a similar structure and property to terephthalic acid, but the furan ring has an oxygen atom, so that the intermolecular hydrogen bonding force is reduced and the Van der Waals' force is increased, thus the solubility and processability are significantly enhanced; meanwhile 4,4-diaminodiphenyl ether contains a ether bond, such that the polymer has good toughness. Therefore, when both of them are used as the basic monomers for forming the basic repeating unit, the furan-based polyamide polymer obtained can have excellent physical and chemical properties. The inventors have also found in the research that when 2-(7-oxidebenzotriazolyl)-N,N,N',N'-tetramethyluronium hexafluorophosphate is used as a catalyst, a high molecular weight furan-based aromatic polyamide polymer can be obtained by a simple reaction process under mild conditions; meanwhile the problem of deterioration of the thermodynamic properties and mechanical properties of the polymer due to the use of conventional inorganic metal salt catalysts can be avoided. Thus, the high molecular weight biomass furan-based aromatic polyamide polymer obtained by the present method has excellent thermodynamic properties and mechanical properties, and can be used for preparing a fiber, a film material, or a nanomaterial/polymer composite material.

On this basis, the high molecular weight furan-based aromatic polyamide provided in the present disclosure is derived from a diacid monomer comprising substituted or unsubstituted furandicarboxylic acid or derivatives thereof and a diamine monomer comprising substituted or unsubstituted 4,4'-diaminodiphenyl ether or derivatives thereof, and comprises a repeating unit of Formula (I) below: 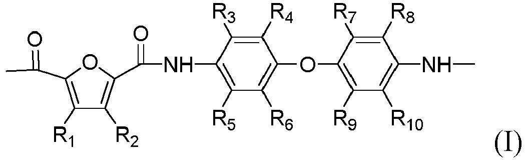
in Formula (I), R₁, R₂, R₃, R₄, R₅, R₆, R₇, R₈, R₉ and R₁₀ are each independently H or a C₁₋₆-alkyl,
wherein the furan-based aromatic polyamide has a number average molecular weight more than 200,000.

In the present disclosure, preferably, the substituted or unsubstituted furandicarboxylic acid or derivatives thereof may be biomass-derived. As used herein, the term "biomass" or "biomass-derived" can be used interchangeably, and means that a compound including a monomer and a polymer is derived from a biomass or a plant, and contains renewable carbon rather than fossil fuel-based or petroleum-based carbon.

As used herein, the term "substituted or unsubstituted furandicarboxylic acid or derivatives thereof" means that the furan ring may have substituents R₁ and R₂, and when both R₁ and R₂ are H, the furandicarboxylic acid or derivatives thereof are unsubstituted; and when one of R₁ and R₂ is not H, the furandicarboxylic acid or derivatives thereof are substituted. Similarly, the term "substituted or unsubstituted 4,4'-diaminodiphenyl ether or derivatives thereof' means that the two benzene rings may have substituents R₃, R₄, R₅, R₆, R₇, R₈, R₉ and R₁₀, and when all of R₃, R₄, R₅, R₆, R₇, R₈, R₉ and R₁₀ H, 4,4'-diaminodiphenyl ether or derivatives thereof are unsubstituted; and when one of R₃, R₄, R₅, R₆, R₇, R₈, R₉ and R₁₀ is not H, 4,4'-diaminodiphenyl ether or derivatives thereof are substituted.

As used herein, the term "C₁₋₆-alkyl" refers to an alkyl having a carbon atom number in a range of from 1 to 6, and examples thereof include methyl, ethyl, propyl, butyl, pentyl, hexyl, and isomers thereof.

In a preferred embodiment, the furan-based aromatic polyamide has a structure of Formula (II) below: 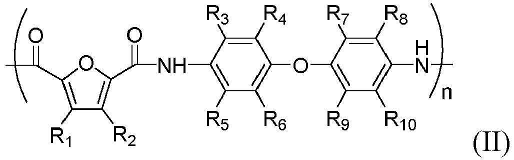 wherein R₁, R₂, R₃, R₄, R₅, R₆, R₇, R₈, R₉ and R₁₀ are each independently H or a C₁₋₆-alkyl, and the degree of polymerization n may be any number ensuring the number average molecular weight is greater than 200,000, for example, n may be in a range of from 700 to 2,000.

In a preferred embodiment, the furan-based aromatic polyamide has a structure of Formula (III) below: 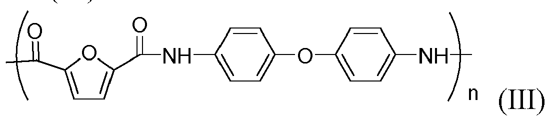 wherein the degree of polymerization n is as defined above.

In the present disclosure, the furandicarboxylic acid derivative may include an ester or a halide formed by substitution at the acid moiety. Preferably, the furandicarboxylic acid derivative used in the present disclosure is furandioyl chloride.

In the present disclosure, optionally, in addition to the substituted or unsubstituted furandicarboxylic acid or derivatives thereof as the diacid monomer, the diacid monomer used may comprise diacid comonomer. In the present disclosure, useful diacid monomers may be, for example, one or more selected from the group consisting of terephthalic acid, isophthalic acid, phthalic acid, 1,9-naphthalic acid, 1,3,5-benzenetricarboxylic acid, adipic acid, nonandioic acid, dodecanedioic acid, succinic acid, maleic acid and citric acid. In the present disclosure, the molar ratio of the substituted or unsubstituted furandicarboxylic acid or derivatives thereof to the diacid comonomer is not particularly limited, and for example, it may be in a range of from 1: 100 to 100:1 or from 1:9 to 9:1.

In an embodiment, the furan-based aromatic polyamide polymer is derived from a copolymer of 2,5-furandioyl chloride, 4,4'-diaminodiphenyl ether, terephthalic acid and *p*-phenylenediamine, which has a structure of Formula (IV) below: 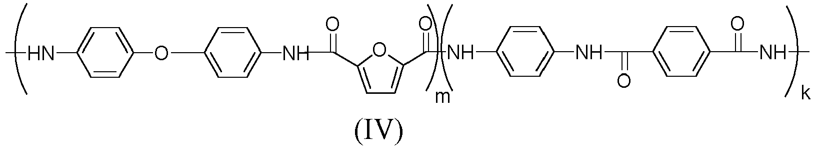 in Formula (IV), the degrees of polymerization m and k satisfy that: m > 1, k > 1, and m + k = 700 - 2,000.

In the present disclosure, optionally, in addition to substituted or unsubstituted 4,4'-diaminodiphenyl ether or derivatives thereof as the diamine monomer, the diamine monomer used may comprise a diamine comonomer. In the present disclosure, useful diamine comonomers may be, for example, one or more selected from the group consisting of *p*-phenylenediamine, *m*-phenylenediamine, 3,3'-dimethylbenzidine, 2,3-diaminotoluene, 4,4-diaminodiphenylmethane, 4,4-diaminodiphenylsulfone, 3,4-diaminodiphenyl ether, 3,3'-dichloro-4,4-diaminodiphenylmethane, 3,3'-dimethyl-4,4'-diaminodimethylmethane, 2,4-diaminotoluene, ethylenediamine, hexanediamine, 1,3-propanediamine, N,N-dimethylethylenediamine, 1,4-butanediamine, 1,2-cyclohexanediamine and decanediamine. In the present disclosure, the molar ratio of the substituted or unsubstituted 4,4'-diaminodiphenyl ether or derivatives thereof to the diamine comonomer is not particularly limited, and for example, it may be in a range of from 1:100 to 100:1 or from 1:9 to 9:1.

In an embodiment, the furan-based aromatic polyamide polymer is derived from a copolymer of 2,5-furandioyl chloride, 4,4'-diaminodiphenyl ether and *p*-phenylenediamine, which has a structure of Formula (V) below: 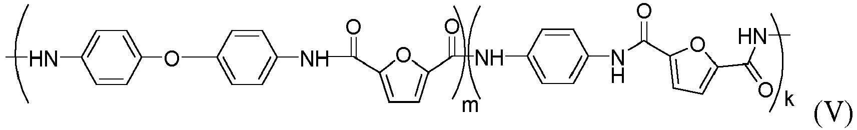 in Formula (V), the degrees of polymerization m and k satisfy that: m > 1, k > 1, and m + k = 700 - 2,000.

The high molecular weight biomass furan-based aromatic polyamide provided in the present disclosure are simply prepared by a method comprising the steps of: dissolving a diamine monomer comprising substituted or unsubstituted 4,4'-diaminodiphenyl ether or derivatives thereof in an organic solvent under the protection of an inert gas to form a diamine solution; adding a diacid monomer comprising substituted or unsubstituted furandicarboxylic acid or derivatives thereof, together with a catalyst of 2-(7-oxidebenzotriazolyl)-N,N,N',N'-tetramethyluronium hexafluorophosphate, to the diamine solution at a temperature in a range of from -10°C to 30°C, so as to perform the reaction under stirring; and continuing the reaction until a furan-based aromatic polyamide with a desired molecular weight is obtained. Optionally, if necessary, the polymer obtained may be separated out, for example, by chromatography.

In the present disclosure, 2-(7-oxidebenzotriazolyl)-N,N,N',N'-tetramethyluronium hexafluorophosphate is used as a catalyst. In comparison to the inorganic metal salt catalysts such as lithium chloride used in the prior art, the catalyst used in the present disclosure can not only be easily and completely removed from the reaction system (for example, the catalyst can be removed by washing with an organic solvent), without the adverse influence of the residual catalyst on the thermodynamic properties and mechanical properties of the polymer obtained, but also with this catalyst, a high molecular weight furan-based polyamide polymer (having a number average molecular weight of greater than 200,000) can be obtained by a simple reaction process under mild reaction conditions (for example, at a normal temperature and pressure). Further, such a catalyst is simple, inexpensive, and easily available.

In the present disclosure, preferably, the organic solvent used may be one or more selected from the group consisting of N,N-dimethylformamide, N,N-dimethylacetamide, N-methylpyrrolidinone and acetonitrile.

In the present disclosure, preferably, the reaction is continued for 2 to 15 hours, for example, about 5 hours.

In the present disclosure, preferably, the mass ratio of the organic solvent to the diamine monomer is in a range of from 2:1 to 10:1, for example, about 5:1.

In the present disclosure, preferably, the molar ratio of the diacid monomer to the diamine monomer is in a range of from 1:1 to 1:1.5, preferably about 1:1.

In the present disclosure, the molecular weight of the furan-based aromatic polyamide obtained may be determined by methods well known to those skilled in the art. For example, the molecular weight may be obtained by Gel Permeation Chromatography (GPC).

The high molecular weight furan-based aromatic polyamide provided in the present disclosure has excellent thermodynamic properties and mechanical properties, and can be used for preparing a fiber, a film material, or a nanomaterial/polymer composite material. For example, a fiber or a filament may be formed by dissolving the polymer in a suitable solvent to obtain a solution (in which the content of the polymer may be, for example, 0.1-50% by weight), and spinning by means of a resin spinning technique in the art. The fiber or filament obtained may be neutralized, washed, dried and/or thermally treated by conventional technologies to obtain a stable and useful fiber or filament.

### Examples

The present invention will be further explained with reference to specific examples.

### ¹H-NMR spectrum

A ¹H-NMR spectrum in deuterated chloroform (CDCl₃) was recorded on a 400 MHz NMR instrument. A deuterated solvent was used as an internal standard, and the proton chemical shift f1 was reported in ppm.

### Materials and devices

N-methylpyrrolidinone: purchased from Sinapharm Chemical Reagent Co., Ltd.

2,5-Furandioyl chloride: purchased from Hefei Leaf Biotech Co., Ltd.

4,4-Diaminodiphenyl ether: purchased from Sinapharm Chemical Reagent Co., Ltd.

2-(7-oxidebenzotriazolyl)-N,N,N',N'-tetramethyluronium hexafluorophosphate: purchased from Sinapharm Chemical Reagent Co., Ltd.

Gel Permeation Chromatography (GPC) instrument: purchased from Nanjing Kejie Analytical Instrument Co., Ltd.

Spinning machine: purchased from Wuxi Lanhua Textile Machinery Co., Ltd.

The above materials and devices are used as received, unless indicated otherwise. Further, all of other relative materials and devices used in the Examples are those well known in the art, unless stated otherwise.

### Example 1: preparation of the high molecular weight furan-based polyamide of Formula (III)

In a glove box under the protection of argon gas, 100 ml of N-methylpyrrolidinone was added into a 250 mL three-neck round bottom flask equipped with a mechanical stirrer, an argon gas inlet and a feeding port, to which 20 g of 2,5-furandioyl chloride was added under mechanical stirring in the argon gas atmosphere. Then, the temperature was controlled at 20°C by a water bath, and 20.8 g of 4,4-diaminodiphenyl ether was added under stirring, together with 0.8 g of 2-(7-oxidebenzotriazolyl)-N,N,N',N'-tetramethyluronium hexafluorophosphate. The reaction was continued for 5 hours under stirring, and then the reaction was ended.

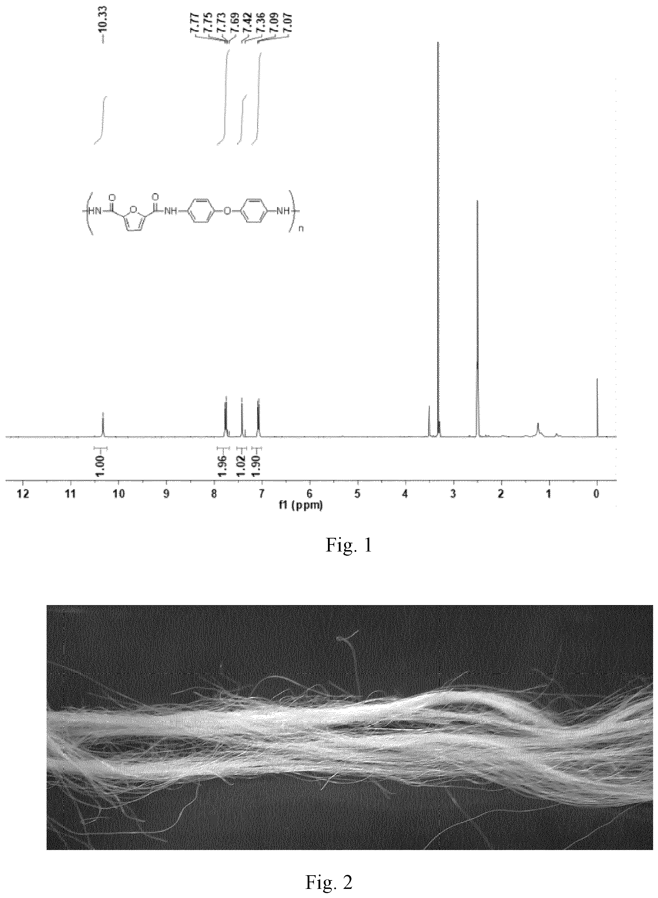

Fig. 1 showed the ¹H-NMR spectrum of the furan-based aromatic polyamide polymer obtained according to Example 1. It could be confirmed from Fig. 1 that the polymer obtained was a furan-based aromatic polyamide polymer obtained through the polymerization reaction of 2,5-furandioyl chloride and 4,4-diaminodiphenyl ether. It was determined from the sampling analysis with the Gel Permeation Chromatography (GPC) instrument that the furan-based polyamide obtained had a number average molecular weight of 616,712 and a molecular weight distribution index of 1.57.

### Example 2: preparation of the high molecular weight furan-based polyamide of Formula (IV)

In a glove box under the protection of argon gas, 100 ml of N-methylpyrrolidinone was added into a 250 mL three-neck round bottom flask equipped with a mechanical stirrer, an argon gas inlet and a feeding port, to which 10 g of 2,5-furandioyl chloride and 8.6 g of terephthalic acid were added under mechanical stirring in the argon gas atmosphere. Then, the temperature was controlled at 20°C by a water bath, and 10.4 g of 4,4-diaminodiphenyl ether and 11.25 g of *p*-phenylenediamine were added under stirring, together with 0.8 g of 2-(7-oxidebenzotriazolyl)-N,N,N',N'-tetramethyluronium hexafluorophosphate. The reaction was continued for 5 hours under stirring. After completion of the reaction, it was determined from the sampling analysis with the Gel Permeation Chromatography (GPC) instrument that the furan-based polyamide obtained had a number average molecular weight of 321,255 and a molecular weight distribution index of 1.60.

### Example 3: preparation of the high molecular weight furan-based polyamide of Formula (V)

In a glove box under the protection of argon gas, 100 ml of N-methylpyrrolidinone was added into a 250 mL three-neck round bottom flask equipped with a mechanical stirrer, an argon gas inlet and a feeding port, to which 20 g of 2,5-furandioyl chloride was added under mechanical stirring in the argon gas atmosphere. Then, the temperature was controlled at 20°C by a water bath, and 10.4 g of 4,4-diaminodiphenyl ether and 11.25 g of *p*-phenylenediamine were added under stirring, together with 0.8 g of 2-(7-oxidebenzotriazolyl)-N,N,N',N'-tetramethyluronium hexafluorophosphate. The reaction was continued for 5 hours under stirring. After completion of the reaction, it was determined from the sampling analysis with the Gel Permeation Chromatography (GPC) instrument that the furan-based polyamide obtained had a number average molecular weight of 293,768 and a molecular weight distribution index of 1.50.

### Example 4: use of the furan-based aromatic polyamide for preparing a fiber

The furan-based aromatic polyamide obtained in Example 1 was added into N,N-dimethylformamide to prepare a stock solution at a concentration of 10% by weight. The stock solution was sent to a spinning machine through a circulating pipe, metered by a metering pump, then entered into a spinneret with 100 orifices (with a diameter of 50 micrometer) via a candle-shaped filter and a connecting pipe. The trickles of the stock solution forced out from orifices of the spinneret flowed into a spinning bath of 60°C deionized water, and were precipitated in the spinning bath to form a fiber.

Fig. 2 showed a photograph of a spun fiber of the furan-based aromatic polyamide obtained according to the present Example. As could be seen from Fig. 2, the fiber produced from the high molecular weight furan-based aromatic polyamide of the present disclosure not only has a pleasant appearance, but also has excellent thermodynamic properties and mechanical properties.

It should be understood that those examples are only for the purpose of illustrating the present invention. The scope of the present application is defined by the appending claims.

## Claims

1. A method for preparing a furan-based aromatic polyamide having a number average molecular weight more than 200,000 determined according to the method/s identified in the specification, the furan-based aromatic polyamide is derived from a diacid monomer comprising substituted or unsubstituted furandicarboxylic acid or derivatives thereof and a diamine monomer comprising substituted or unsubstituted 4,4'-diaminodiphenyl ether or derivatives thereof, and thus comprises a repeating unit of Formula (I) below: 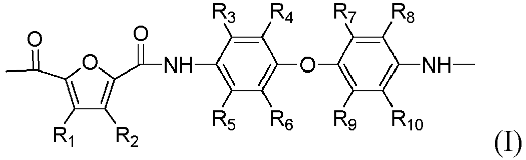
in Formula (I), R₁, R₂, R₃, R₄, R₅, R₆, R₇, R₈, R₉ and R₁₀ are each independently H or a C₁₋₆-alkyl,
the method comprises:
dissolving a diamine monomer comprising substituted or unsubstituted 4,4'-diaminodiphenyl ether or derivatives thereof in an organic solvent under the protection of an inert gas to form a diamine solution;
adding a diacid monomer comprising substituted or unsubstituted furandicarboxylic acid or derivatives thereof, together with a catalyst of 2-(7-oxidebenzotriazolyl)-N,N,N',N'-tetramethyluronium hexafluorophosphate, to the diamine solution at a temperature in a range of from -10°C to 30°C, so as to perform the reaction under stirring; and
continuing the reaction until a furan-based aromatic polyamide with the desired molecular weight is obtained.

2. The method according to claim 1, wherein the organic solvent is one or more selected from the group consisting of N,N-dimethylformamide, N,N-dimethylacetamide, N-methylpyrrolidinone and acetonitrile; and the reaction is continued for 2 to 15 hours.

3. The method according to claim 2, wherein a mass ratio of the organic solvent to the diamine monomer is in a range of from 2:1 to 10:1.

4. The method according to claim 1, wherein a molar ratio of the diacid monomer to the diamine monomer is in a range of from 1:1 to 1:1.5.

5. The method according to claim 1, wherein the substituted or unsubstituted furandicarboxylic acid or derivatives thereof is biomass-derived.

6. The method according to claim 1, wherein the furan-based aromatic polyamide has a structure of Formula (II) below: 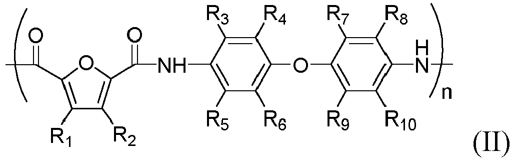 in Formula (II), R₁, R₂, R₃, R₄, R₅, R₆, R₇, R₈, R₉ and R₁₀ are each independently H or a C₁₋₆-alkyl, and n is in a range of from 700 to 2,000.

7. The method according to claim 1, wherein
the derivative of the furandicarboxylic acid is furandioyl chloride;
the diacid monomer further comprises a diacid comonomer, wherein the diacid comonomer is one or more selected from the group consisting of terephthalic acid, isophthalic acid, phthalic acid, 1,9-naphthalic acid, 1,3,5-benzenetricarboxylic acid, adipic acid, nonandioic acid, dodecanedioic acid, succinic acid, maleic acid and citric acid;
the diamine monomer further comprises a diamine comonomer, wherein the diamine comonomer is one or more selected from the group consisting of *p*-phenylenediamine, *m*-phenylenediamine, 3,3'-dimethylbenzidine, 2,3-diaminotoluene, 4,4-diaminodiphenylmethane, 4,4-diaminodiphenylsulfone, 3,4-diaminodiphenyl ether, 3,3'-dichloro-4,4-diaminodiphenylmethane, 3,3'-dimethyl-4,4'-diaminodimethylmethane, 2,4-diaminotoluene, ethylenediamine, hexanediamine, 1,3-propanediamine, N,N-dimethylethylenediamine, 1,4-butanediamine, 1,2-cyclohexanediamine and decanediamine.

8. The method according to claim 7, wherein the furan-based aromatic polyamide has a structure of Formula (III), Formula (IV) or Formula (V) below: 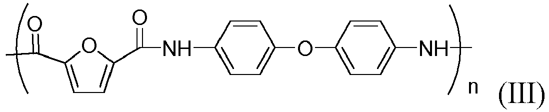
in Formula (III), n is in a range of from 700 to 2,000; 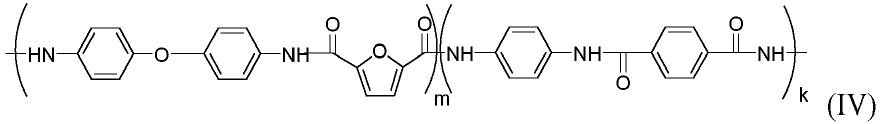
in Formula (IV), m > 1, k > 1, and m + k = 700 - 2,000; and 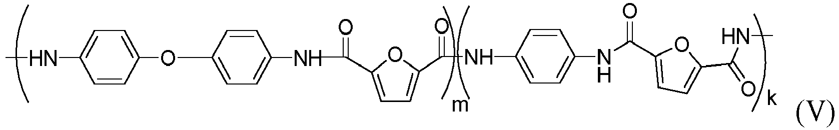
in Formula (V), m > 1, k > 1, and m + k = 700 - 2,000.

## Patentansprüche

1. Verfahren zur Herstellung eines aromatischen Polyamids auf Furanbasis mit einem durchschnittlichen Molekulargewicht (Zahlenmittel) von mehr als 200.000, bestimmt gemäß dem/den Verfahren, das/die in den technischen Angeben angegeben ist/sind, wobei das aromatische Polyamid auf Furanbasis von einem Disäuremonomer, das substituierte oder unsubstituierte Furandicarbonsäure oder Derivate davon umfasst, und einem Diaminmonomer, das substituierten oder unsubstituierten 4,4'-Diaminodiphenylether oder Derivate davon umfasst, abgeleitet ist, und somit eine sich wiederholende Einheit der folgenden Formel (I) umfasst: 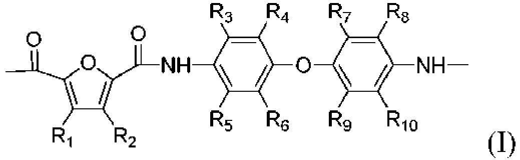 wobei in Formel (I) R₁, R₂, R₃, R₄, R₅, R₆, R₇, R₈, R₉ und R₁₀ jeweils unabhängig H oder ein C₁₋₆-Alkyl sind, wobei das Verfahren umfasst:
Lösen eines Diaminmonomers, das substituierten oder unsubstituierten 4,4'-Diaminodiphenylether oder Derivate davon umfasst, in einem organischen Lösungsmittel unter Schutz von Inertgas, um eine Diaminlösung zu bilden;
Zufügen eines Disäuremonomers, umfassend substituierte oder unsubstituierte Furandicarbonsäure oder Derivate davon, zusammen mit deinem Katalysator 2-(7-Oxidbenzotriazolyl)-N,N,N',N'-tetramethyluroniumhexafluorphosphat zu der Diaminlösung bei einer Temperatur in einem Bereich von -10 °C bis 30 °C, um die Reaktion unter Rühren durchzuführen; und
Fortsetzen der Reaktion, bis ein aromatisches Polyamid auf Furanbasis mit dem gewünschten Molekulargewicht erhalten wird.

2. Verfahren nach Anspruch 1, wobei das organische Lösungsmittel ein oder mehrere ausgewählt aus der Gruppe bestehend aus N,N-Dimethylformamid, N,N-Dimethylacetamid, N-Methylpyrrolidinon und Acetonitril ist; und die Reaktion 2 bis 15 Stunden fortgesetzt wird.

3. Verfahren nach Anspruch 2, wobei ein Massenverhältnis von dem organischen Lösungsmittel zu dem Diaminmonomer in einem Bereich von 2:1 bis 10:1 liegt.

4. Verfahren nach Anspruch 1, wobei ein Molverhältnis von dem Disäuremonomer zu dem Diaminmonomer in einem Bereich von 1:1 bis 1:1,5 liegt.

5. Verfahren nach Anspruch 1, wobei die substituierte oder unsubstituierte Furandicarbonsäure oder Derivate davon von Biomasse abgeleitet ist/sind.

6. Verfahren nach Anspruch 1, wobei das aromatische Polyamid auf Furanbasis eine Struktur der folgenden Formel (II) hat: 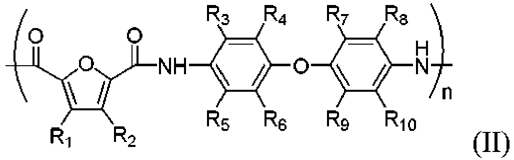 wobei in Formel (II) R₁, R₂, R₃, R₄, R₅, R₆, R₇, R₈, R₉ und R₁₀ jeweils unabhängig H oder ein C₁₋₆-Alkyl sind, und n in einem Bereich von 700 bis 2000 liegt.

7. Verfahren nach Anspruch 1, wobei das Derivat der Furandicarbonsäure Furandioylchlorid ist;
das Disäuremonomer des Weiteren ein Disäurecomonomer umfasst, wobei das Disäurecomonomer ein oder mehrere ausgewählt aus der Gruppe bestehend aus Terephthalsäure, Isophthalsäure, Phthalsäure, 1,9-Naphthalinsäure, 1,3,5-Benzoltricarbonsäure, Adipinsäure, Nonandisäure, Dodecandisäure, Bernsteinsäure, Maleinsäure und Citronensäure ist;
das Diaminmonomer des Weiteren ein Diamincomonomer umfasst, wobei das Diamincomonomer ein oder mehrere ausgewählt aus der Gruppe bestehend aus *p*-Phenylendiamin, *m*-Phenylendiamin, 3,3'-Dimethylbenzidin, 2,3-Diaminotoluol, 4,4-Diaminodiphenylmethan, 4,4-Diaminodiphenylsulfon, 3,4-Diaminodiphenylether, 3,3'-Dichlor-4,4-diaminodiphenylmethan, 3,3'-Dimethyl-4,4'-diaminodimethylmethan, 2,4-Diaminotoluol, Ethylendiamin, Hexandiamin, 1,3-Propandiamin, N,N-Dimethylethylendiamin, 1,4-Butandiamin, 1,2-Cyclohexandiamin und Decandiamin ist.

8. Verfahren nach Anspruch 7, wobei das aromatische Polyamid auf Furanbasis eine Struktur der folgenden Formel (III), Formel (IV) oder Formel (V) hat: 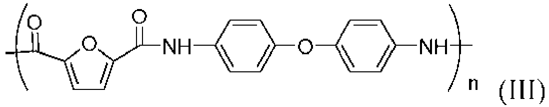
wobei in Formel (III) n in einem Bereich von 700 bis 2000 liegt; 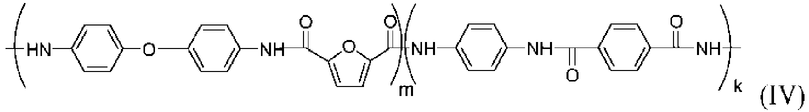
in Formel (IV) m > 1, k > 1, und m + k = 700 - 2000; und 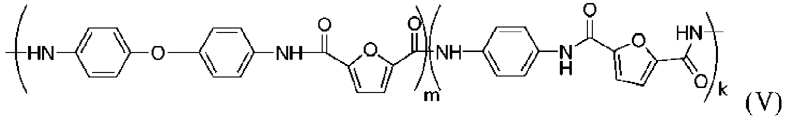
in Formel (V) m > 1, k > 1, und m + k = 700 - 2000.

## Revendications

1. Procédé pour la préparation d'un polyamide aromatique à base de furanne ayant un poids moléculaire moyen en nombre supérieur à 200 000 déterminé selon le ou les procédés identifiés dans la description, le polyamide aromatique à base de furanne étant issu d'un monomère de diacide comprenant un acide furannedicarboxylique substitué ou non substitué ou des dérivés correspondants et d'un monomère de diamine comprenant un éther de 4,4-diaminodiphényle substitué ou non substitué ou des dérivés correspondants, et ainsi comprenant un motif répétitif de formule (I) ci-dessous : 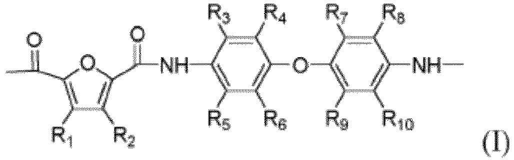
dans la formule (I), R₁, R₂, R₃, R₄, R₅, R₆, R₇, R₈, R₉ et R₁₀ étant chacun indépendamment H ou un C₁₋₆-alkyle,
le procédé comprenant :
la dissolution d'un monomère de diamine comprenant un éther de 4,4'-diaminodiphényle substitué ou non substitué ou des dérivés correspondants dans un solvant organique sous la protection d'un gaz inerte pour former une solution de diamine ;
l'ajout d'un monomère de diacide comprenant un acide furannedicarboxylique substitué ou non substitué ou des dérivés correspondants, conjointement avec un catalyseur d'hexafluorophosphate de 2-(7-oxydebenzotriazolyl)-N,N,N',N'-tétraméthyluronium, à la solution de diamine à une température dans une plage allant de -10 °C à 30 °C, de sorte à réaliser la réaction sous agitation ; et
la poursuite de la réaction jusqu'à ce qu'un polyamide aromatique à base de furanne doté du poids moléculaire souhaité soit obtenu.

2. Procédé selon la revendication 1, le solvant organique étant l'un ou plusieurs choisis dans le groupe constitué par le N,N-diméthylformamide, le N,N-diméthylacétamide, la N-méthylpyrrolidinone et l'acétonitrile ; et la réaction étant poursuivie pendant 2 à 15 heures.

3. Procédé selon la revendication 2, un rapport en masse du solvant organique sur le monomère de diamine étant dans une plage allant de 2 : 1 à 10 : 1.

4. Procédé selon la revendication 1, un rapport molaire du monomère de diacide sur le monomère de diamine étant dans une plage de 1 : 1 à 1 : 1,5.

5. Procédé selon la revendication 1, l'acide furannedicarboxylique substitué ou non substitué ou les dérivés correspondants étant issu(s) d'une biomasse.

6. Procédé selon la revendication 1, le polyamide aromatique à base de furanne ayant une structure de formule (II) ci-dessous : 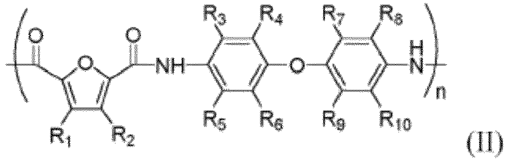 dans la formule (I), R₁, R₂, R₃, R₄, R₅, R₆, R₇, R₈, R₉ et R₁₀ étant chacun indépendamment H ou un C₁₋₆-alkyle, et n étant dans une plage allant de 700 à 2 000.

7. Procédé selon la revendication 1,
le dérivé de l'acide furannedicarboxylique étant le chlorure de furannedioyle ;
le monomère de diacide comprenant en outre un comonomère de diacide, le comonomère de diacide étant l'un ou plusieurs choisis dans le groupe constitué par l'acide téréphtalique, l'acide isophtalique, l'acide phtalique, l'acide 1,9-naphtalique, l'acide 1,3,5-benzènetricarboxylique, l'acide adipique, l'acide nonanedioïque, l'acide dodécanedioïque, l'acide succinique, l'acide maléique et l'acide citrique ;
le monomère de diamine comprenant en outre un comonomère de diamine, le comonomère de diamine étant l'un ou plusieurs choisis dans le groupe constitué par p-phénylènediamine, m-phénylènediamine, 3,3'-diméthylbenzidine, 2,3-diaminotoluène, 4,4-diaminodiphénylméthane, 4,4-diaminodiphénylsulfone, un éther de 3,4-diaminodiphényle, 3,3'-dichloro-4,4-diaminodiphénylméthane, 3,3'-diméthyl-4,4'-diaminodiméthylméthane, 2,4-diaminotoluène, éthylènediamine, hexanediamine, 1,3-propanediamine, N,N-diméthyléthylènediamine, 1,4-butanediamine, 1,2-cyclohexanediamine et décanediamine.

8. Procédé selon la revendication 7, le polyamide aromatique à base de furanne ayant une structure de formule (III), de formule (IV) ou de formule (V) ci-dessous : 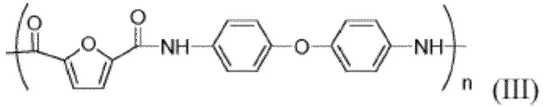
dans la formule (III), n étant dans une plage allant de 700 à 2 000 ; 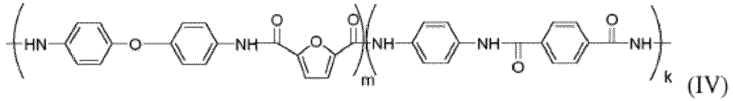
dans la formule (IV), m > 1, k > 1 et m + k = 700 à 2 000 ; et 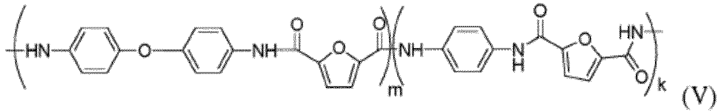
dans la formule (V), m > 1, k > 1 et m + k = 700 à 2 000.
